# EUROPÄISCHE PATENTSCHRIFT

(11) **EP 1 625 030 B1**
(45) Veröffentlichungstag und Bekanntmachung des Hinweises auf die Patenterteilung: **04.08.2010**
(21) Anmeldenummer: 04713468.9
(22) Anmeldetag: 21.02.2004
(51) Int. Cl.: B60G 15/06

(54) **FEDERBEIN-ABSTÜTZUNG FÜR EIN FAHRZEUG-RAD**
SUSPENSION STRUT FOR A VEHICLE WHEEL
APPUI DE JAMBE DE FORCE POUR UNE ROUE DE VEHICULE

(30) Priorität: 21.03.2003 DE 10312576; 13.12.2003 DE 10358521
(43) Veröffentlichungstag der Anmeldung: 15.02.2006
(73) Patentinhaber: Bayerische Motoren Werke Aktiengesellschaft, 80809 München (DE)
(72) Erfinder: GIELISCH, Sebastian, 85716 Unterschleissheim (DE)
(86) Internationale Anmeldenummer: PCT/EP2004/001734
(87) Internationale Veröffentlichungsnummer: WO 2004/082968

(56) Entgegenhaltungen:
- DE-A- 3 619 942
- FR-A- 2 825 324
- US-A- 4 690 425
- US-A1- 2002 135 111

## Beschreibung

Die Erfindung betrifft eine Federbein-Abstützung für ein Fahrzeug-Rad mit einer an einem Radführungsglied abgestützten Tragfeder mit zugeordnetem Dämpfer, die über ein elastomeres und somit als Feder und Dämpfer wirkendes Stützlager letztlich an der Karosserie des Fahrzeugs abgestützt sind, sowie mit einer Zusatzfeder, die erst ab einem bestimmten Einfederweg der Tragfeder wirksam wird.

Bekannt sind unterschiedliche Konzepte für die Anordnung der Feder-Dämpfer-Elemente von Radführungsgliedern einer Fahrzeug-Radaufhängung, über welche die Fzg.-Karosserie an dem oder den Radführungsgliedern eines Fahrzeug-Rades abgestützt ist. Bei mehrspurigen Fahrzeugen wird an gelenkten Rädern zumeist das sog. Mc-Pherson-Federbein verbaut, wobei eine Tragfeder und ein zugeordneter, parallel geschalteter Dämpfer einerseits an einem Radführungsglied und andererseits über ein sog. Stützlager an der Karosserie des Fahrzeugs abgestützt sind. Dieses Stützlager ist dabei ein in die Karosserie quasi "eingeknüpftes" ElastomerElement, welches gleichzeitig als Feder und Dämpfer wirkt. Üblicherweise ist die Kolbenstange des Dämpfers, dessen Dämpfer-Rohr am Radführungsglied abgestützt und mit einer Aufnahme für die Tragfeder versehen ist, am Stützlager befestigt und es ist üblicherweise in diesem Bereich ferner eine sog. Zusatzfeder vorgesehen, die ebenfalls als elastomeres Federelement ausgebildet ist und an der das Dämpferrohr nach einem gewissen Einfederweg der Tragfeder zum Anschlag kommt. Mit dieser federwegabhängig gestuften Reihenschaltung von Tragfeder und Zusatzfeder kann dann die Federcharakteristik relativ einfach in gewünschter Weise gestaltet werden.

Diese konventionelle, bspw. in der gattungsgemäßen DE 36 19 942 A1 gezeigte und insbesondere an gelenkten Rädern anzutreffende Federbein-Anordnung hat den -Vorteil, das sich die möglichen "Einfeder"-Wege des Stützlagers und des der Tragfeder parallelgeschalteten Dämpfers addieren. Der lastabhängige Weg des Stützlagers ist vorteilhafterweise mit der Reihenschaltung der Tragfeder und der Zusatzfeder relativ groß. Problematisch ist hierbei jedoch die mechanische Belastung des Elastomer-Elements des Stützlagers, nachdem dieses die hohen Kräfte sowohl von der Tragfeder als auch von der Zusatzfeder aufnehmen muss.

Bekannt ist ferner eine Anordnung, bei welcher die Kräfte des der Tragfeder parallel geschalteten Dämpfers und der Zusatzfeder über das Stützlager in die Fzg.-Karosserie eingeleitet werden, während die Tragfeder selbst unter Umgehung dieses Stützlagers mit ihrem dem Radführungsglied abgewandten Ende praktisch direkt an der Karosserie abgestützt ist, vgl. bspw. die DE 197 55 046 C1. Auch hierbei wird jedoch das Elastomerelement noch relativ stark belastet, nachdem die Kraft der Zusatzfeder mit Wirksamwerden derselben sehr hoch ist. In Verbindung mit lenkbaren Rädern besteht bei dieser Bauart ferner die Gefahr, dass durch die Federkraft der sich direkt an der Karosserie abstützenden Tragfeder Lenkmomente in die FahrzeugAchse eingeleitet werden.

Auch bei einer noch anderen Anordnung (vgl. bspw. die DE 197 19 301 A1) ist die Tragfeder unter Umgehung des Stützlagers bzw. des Elastomerelements desselben mehr oder weniger direkt an der Karosserie abgestützt, dabei jedoch zusammen mit der (parallel geschalteten) Zusatzfeder, d.h. dass hier weder die Kraft der Zusatzfeder noch die Kraft der Tragfeder in das Stützlager eingeleitet wird. Die letztgenannte Anordnung hat zwar den Vorteil, dass die mechanische Belastung des Stützlagers sehr gering ist, jedoch ergibt sich bei dieser sog. getrennten Lagerung gegenüber der im vorhergehenden Absatz erläuterten konventionellen Lagerung ein kleinerer Weg am Stützlager und damit ein kleiner Radhub bei gleichbleibendem Dämpferhub. Weiterhin besteht auch hier die im vorhergehenden Absatz genannte Gefahr einer Lenkmomentenstörung durch die eingeleitete Federkraft.

Hiermit soll nun eine weitere Anordnung aufgezeigt werden, die sich durch einen insbesondere gegenüber den beiden letztgenannten Anordnungen günstigeren Dämpferhub auszeichnet und wobei gleichzeitig die mechanische Belastung des elastomeren Stützlagers in vertretbaren Grenzen gehalten wird (= Aufgabe der vorliegenden Erfindung).

Die Lösung dieser Aufgabe ist bei einer Federbein-Abstützung für ein Fahrzeug-Rad mit einer an einem Radführungsglied abgestützten Tragfeder mit zugeordnetem Dämpfer, die über ein elastomeres und somit als Feder und Dämpfer wirkendes Stützlager letztlich an der Karosserie des Fahrzeugs abgestützt sind, sowie mit einer Zusatzfeder, die erst ab einem bestimmten Einfederweg der Tragfeder wirksam wird, dadurch gekennzeichnet, dass die Zusatzfeder unter Umgehung des Stützlagers zwischen einem Radführungsglied und der Fahrzeug-Karosserie wirkt. Vorteilhafte Weiterbildungen sind Inhalt der Unteransprüche.

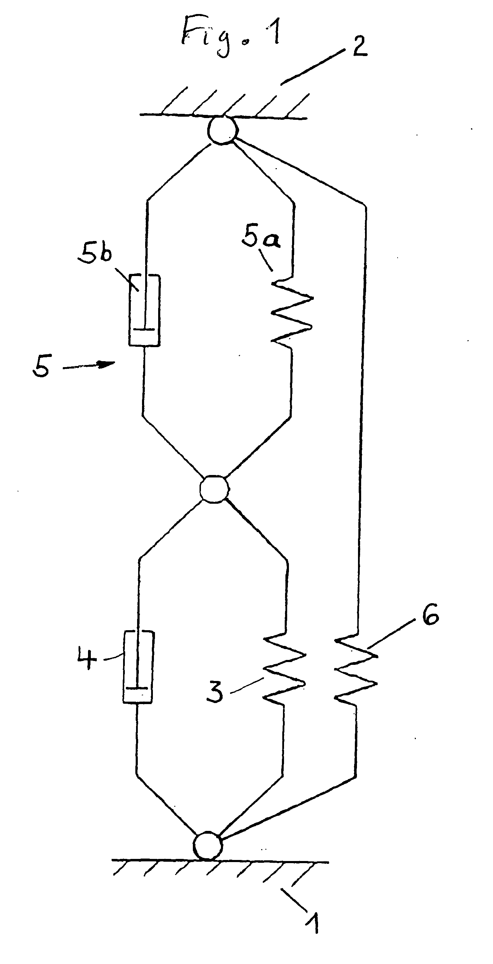

Eine entsprechende Anordnung ist lediglich prinzipiell in der beigefügten **Figur 1** dargestellt, anhand derer die detaillierte Erläuterung erfolgt. Dabei ist mit der Bezugsziffer 1 ein Radführungsglied eines mehrspurigen Kraftfahrzeugs sowie mit der Bezugsziffer 2 dessen Karosserie gekennzeichnet. Über eine Tragfeder 3, welcher ein Dämpfer 4 parallel geschaltet ist, ist die Karosserie 2 auf dem Radführungsglied 1 abgestützt, und zwar unter Zwischenschaltung eines Stützlagers 5, das sich seinerseits funktional durch eine Feder 5a sowie einen hierzu parallelen Dämpfer 5b beschreiben lässt. Vorgesehen ist ferner eine grundsätzlich bekannte Zusatzfeder 6, die erst bei Überschreiten eines gewissen Einfederweges der Tragfeder 3 wirksam wird.

Erfindungsgemäß ist nun die Zusatzfeder 6 unter Umgehung des Stützlagers 5 quasi direkt zwischen dem Radführungsglied 1 und der Karosserie 2 eingespannt, wobei selbstverständlich noch irgendwelche Zwischenelemente vorgesehen sein können, die dann aber nicht als Feder oder Dämpfer wirken. Diese Anordnung hat den Vorteil, dass sich die Kraft der Tragfeder 3 in einem nennenswerten lastabhängigen Weg ("Dämpferhub") des Stützlagers 5 niederschlägt, d.h. der Radhub kann groß gehalten werden bei im Vergleich zu den bisherigen getrennten Lageranordnungen kleinen Dämpferhüben. Vorteilhafterweise werden gleichzeitig die extrem hohen Kräfte der Zusatzfeder 6 dann, wenn diese entstehen, d.h. wenn die Zusatzfeder 6 zum Eingriff kommt, nicht in das Elastomermaterial des Stützlagers 5 eingeleitet.

Diese Federbein-Abstützung ist also dadurch gekennzeichnet, dass die Zusatzfeder 6 im wesentlichen direkt an der Karosserie 2 abgestützt ist, während die Tragfeder 3 am Stützlager 5 bzw. an einem Elastomerelement desselben abgestützt ist. Hiermit ergeben sich mehrere Vorteile, nämlich ein relativ niedriges Kraftniveau im Stützlager bzw. in dessen Elastomerelement, keine Gefahr einer Lenkmomentenstörung durch die eingeleitete Federkraft, sowie ein relativ großer möglicher Radhub (als Addition von Dämpfer- und Stützlagerweg).

Eine detaillierte Ausführungsform einer derartigen Federbein-Abstützung für ein Fahrzeug-Rad mit einer am Radführungsglied abgestützten Tragfeder mit zugeordnetem Dämpfer, wobei ein der Tragfeder zugeordneter Federteller sowie eine Kolbenstange des Dämpfers über ein Elastomerelement letztlich an der Karosserie des Fahrzeugs abgestützt sind, sowie mit einer einen Anschlag für den Dämpferzylinder des Dämpfers bildenden Zusatzfeder, die erst ab einem bestimmten Einfederweg der Tragfeder wirksam wird und die unter Umgehung des Elastomerelementes im wesentlichen direkt an der Karosserie abgestützt ist, und die insbesondere auch für gelenkte Räder Anwendung finden kann, ist dadurch gekennzeichnet, dass ein sich an der Karosserie abstützender Stütztopf für die Zusatzfeder mit dem Federteller der Tragfeder verschachtelt angeordnet ist.

Es wird somit weiterhin eine besondere Gestaltung des der Tragfeder zugeordneten Federtellers in Verbindung mit einem sog. Stütztopf für die Zusatzfeder vorgeschlagen. Diese besondere Gestaltung erlaubt es, die Zusatzfeder sowie die Tragfeder wie allgemein üblich zu gestalten und anzuordnen, nämlich konzentrisch zueinander und dabei im wesentlichen koaxial zur Kolbenstange des Dämpfers, wobei die bevorzugt als Schraubenfeder ausgebildete Tragfeder einen größeren Durchmesser als die Zusatzfeder besitzt, d.h. die Zusatzfeder liegt praktisch innerhalb der Tragfeder. Auch das Elastomerelement des Stützlagers kann hiermit wie üblich gestaltet und angeordnet werden, d.h. dass die Kolbenstange mit ihrem freien Ende an diesem Elastomerelement befestigt wird. Aufgrund der sog. verschachtelten Bauweise ist es also möglich, dass sich die einen relativ großen Durchmesser aufweisende Tragfeder über ihren Federteller an dem zentral, d.h. im wesentlichen im Bereich der Tragfeder- oder Kolbenstangen- bzw. Federbein-Achse liegenden Elastomerelement abstützt, während die einen relativ kleinen Durchmesser aufweisende und praktisch innerhalb der Tragfeder liegende Zusatzfeder sich über ihren sog. Stütztopf in einem Bereich, der bezüglich der Kolbenstange des Dämpfers in Radialrichtung außerhalb des besagten Elastomerelements liegt, an der Karosserie des Fahrzeugs abstützt. Ein erfindungsgemäß gestalteter Federteller für die Tragfeder sowie ein erfindungsgemäß gestalteter Stütztopf für die Zusatzfeder ermöglichen also eine sog. "Überkreuz-Abstützung", d.h. dass in Radialrichtung bezüglich der Achse des Federbeins (= Achse des Dämpfers sowie dessen Kolbenstange = Achse der Tragfeder) betrachtet die innerhalb der Tragfeder liegende Zusatzfeder außerhalb des Abstützbereiches der Tragfeder abgestützt ist.

Eine bevorzugte Ausführungsform, die im weiteren anhand eines Ausführungsbeispieles näher beschrieben wird, ist dadurch gekennzeichnet, dass der Federteller der Tragfeder im wesentlichen topfförmig ausgebildet ist, einen aus Festigkeitsgründen bevorzugt umlaufenden Kragen zur Abstützung der Tragfeder aufweist, mit seinem Boden am Elastomerelement anliegt und zumindest in der Topfwand geeignete Aussparungen aufweist, durch welche entsprechende Vorsprünge des im wesentlichen konzentrisch sich auf der dem Elastomerelement abgewandten Seite des Federteller-Bodens befindenden Zusatzfeder-Stütztopfes hindurchtreten, über die der Zusatzfeder-Stützfopf an der Karosserie abgestützt ist.

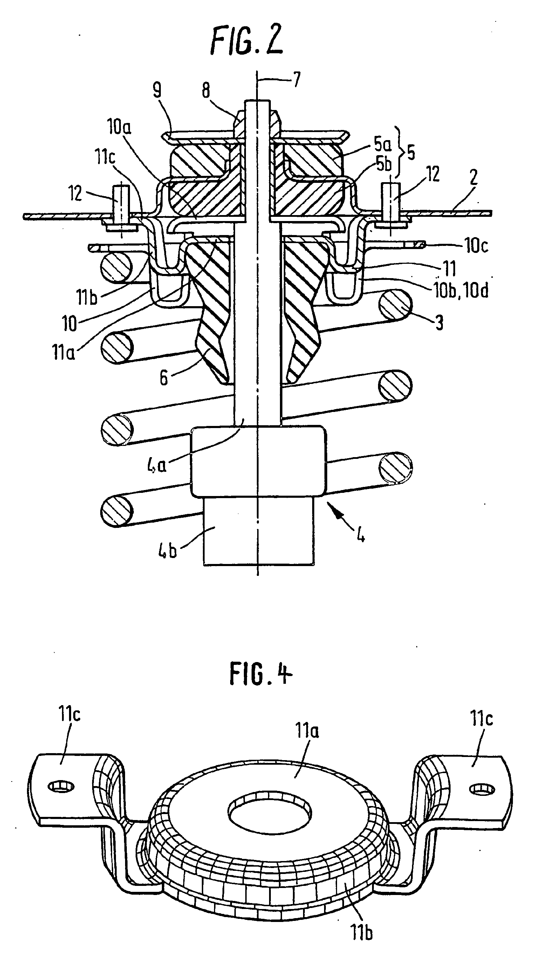

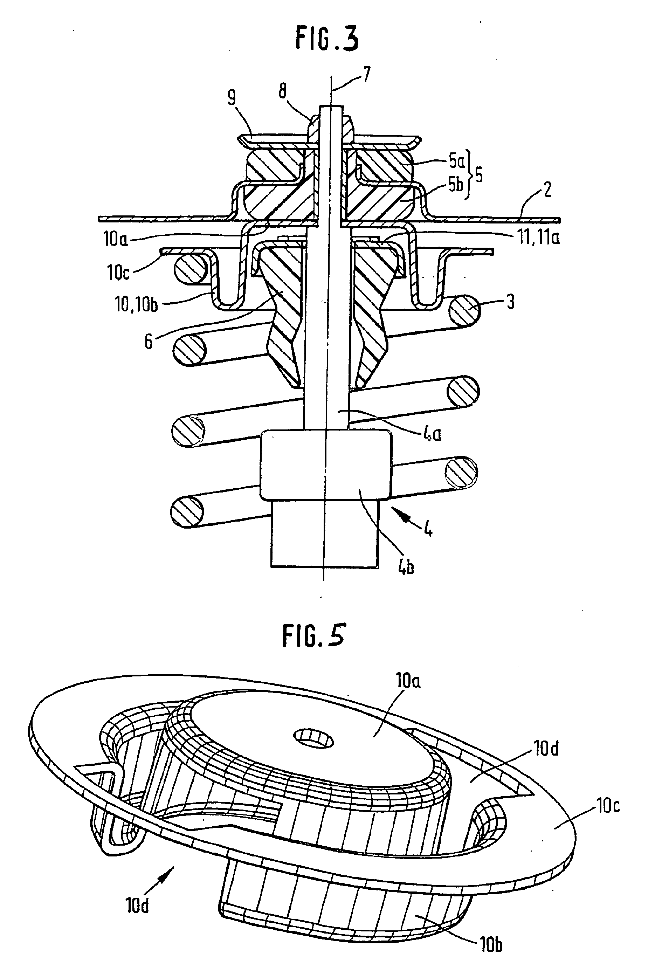

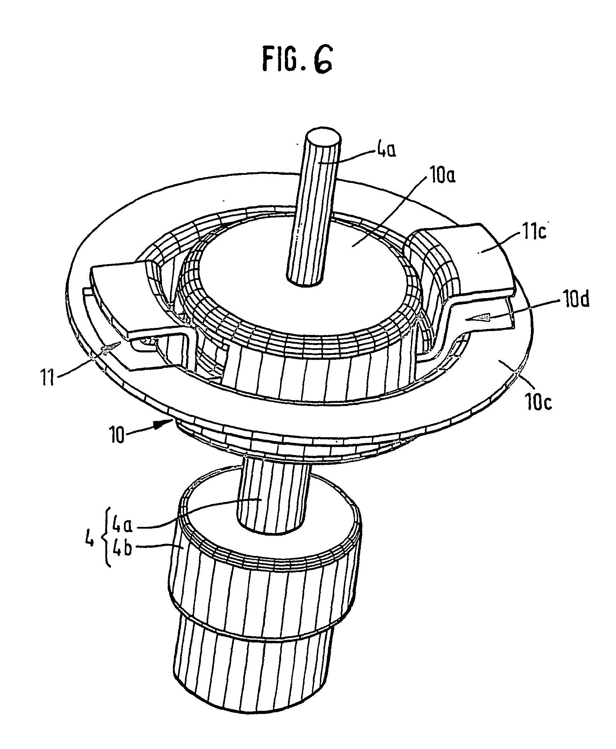

Ein solches Ausführungsbeispiel der vorliegenden Erfindung ist in den weiteren beigefügten Figuren auf das wesentliche beschränkt dargestellt, wobei **Figur 2** einen ersten Längsschnitt durch eine erfindungsgemäße Federbein-Abstützung zeigt, von welcher in **Figur 3** der gegenüber der Schnittebene von Fig.1 um 90° gedrehte Längsschnitt dargestellt ist. **Figur 4** zeigt in einer räumlichen Darstellung bei Aufsicht von schräg oben alleine einen bzw. den Stütztopf für die Zusatzfeder, und **Figur 5** eine entsprechende Ansicht des Federtellers für die Tragfeder, während in **Figur 6** eine Ansicht von schräg oben auf den Federteller der Tragfeder mit dem Stütztopf für die Zusatzfeder in Einbaulage, d.h. mit der Kolbenstange und dem Dämpferzylinder des Dämpfers dieses Federbeins dargestellt ist. Erfindungswesentlich können dabei sämtliche näher beschriebenen Merkmale sein.

In den Figuren 2 - 6 nicht dargestellt ist ein Radführungsglied eines Rades eines mehrspurigen Kraftfahrzeugs, da die Gestaltung eines Federbeins bzw. Feder-Dämpfer-Beins in diesem Bereich wie im bekannten Stand der Technik üblich ist bzw. sein kann. Die vorliegende Erfindung befasst sich mit dem gegenüberliegenden Bereich des Federbeins, nämlich mit dessen Abstützung an der mit der Bezugsziffer 2 bezeichneten Karosserie des Kraftfahrzeugs (vgl. zunächst Fig.2). Bestandteile des Federbeins sind dabei u.a. eine Tragfeder 3, welcher ein Dämpfer 4 parallel geschaltet ist. Über dieses Federbein ist die Karosserie 2 auf einem bzw. dem Radführungsglied abgestützt. Im Abstützbereich ist die Karosserie 2 hier derart geformt, dass sie ein aus zwei Einzelelementen 5a, 5b zusammengesetztes Elastomerelement 5 von im wesentlichen kreiszylindrischer Gestalt aufnehmen kann, wobei das erste Einzelelement 5a oberhalb der in diesem Bereich flanschartig gestalteten und dabei eine Durchtrittsöffnung für eine Kolbenstange 4a des Dämpfers 4 aufweisende Karosserie 2 liegt, während das zweite Einzelelement 5b im wesentlichen unterhalb dieses Karosserie-Flansches liegt.

Die Längsachse 7 des Federbeins, die im wesentlichen durch die Achse des Dämpfers 4 bzw. der Kolbenstange 4a desselben bestimmt ist, fällt mit der Zylinderachse des im wesentlichen horizontal geteilten Elastomerelements 5 im wesentlichen zusammen. Dabei durchdringt die Kolbenstange 4a das Elastomerelement 5 in einer mit der genannten Karosserie-Durchtrittsöffnung korrespondierenden Durchgangsbohrung und ist am Elastomerelement 5 befestigt. Hierzu ist auf das freie Ende der Kolbestange 4a eine Zentralmutter 8 aufgeschraubt, die auf einen sog. Gelenkteller 9, der auf der Oberseite des Elastomerelements 5 aufliegt, pressend einwirkt. Das entsprechende Gegenlager hierzu wird hier durch den Boden 10a eines im weiteren noch näher erläuterten Federtellers 10 für die Tragfeder 3 gebildet, der an der Unterseite des Elastomerelements 5 anliegt und mit der diesem Elastomerelement 5 gegenüberliegenden Seite an einem Absatz der Kolbenstange 4a abgestützt ist.

Unterhalb dieses genannten Absatzes ist auf der Kolbenstange 4a des Dämpfers 4 eine gummielastische sog. Zusatzfeder 6 angeordnet, an der bei entsprechender Einfederung der Tragfeder 3 und somit bei entsprechender Verlagerung der Kolbenstange 4a in den Dämpferzylinder 4b des Dämpfers 4 hinein der Dämpferzylinder 4b mit seiner der Karosserie 2 (bzw. dem Elastomerelement 5) zugewandten Seite zum Anschlag kommen kann. Auf geeignete Weise gehalten wird diese Zusatzfeder 6 von einem dieser zugeordneten sog. Stütztopf 11, der mit sog. Vorsprüngen 11c an der Karosserie 2 abgestützt bzw. mittels Befestigungsbolzen 12 an dieser befestigt ist. Besonders deutlich geht die Gestalt dieses Stütztopfes 11 dabei aus Fig.4 hervor. Dieser Stütztopf 11 weist einen Boden 11a sowie eine sich daran anschließende bezüglich der Längssachse 7 umlaufende Topfwand 11b auf, von welcher die hier beiden einander gegenüberliegenden Vorsprünge 11c seitlich nach außen abragen. Im Boden 11a befindet sich dabei eine zentrale Durchtrittsöffnung für die Kolbenstange 4a des Dämpfers 4.

Bereits kurz erwähnt wurde ein Federteller 10 für die Tragfeder 6, die mit ihrem oberen, dem eingangs genannten Radführungsglied gegenüber liegenden Ende an einem (bezüglich der Längsachse 7) umlaufenden Kragen 10c dieses ansonsten im wesentlichen topfförmigen Federtellers 10 abgestützt ist. Dieser Kragen 10c ist mit dem bereits genannten Boden 10a dieses Federtellers 10 über die sog. Topfwand 10b verbunden, die in Form einer Schleife bzw. im Schnitt (wie insbesondere aus Fig.3 hervorgeht) im wesentlichen U-förmig ausgebildet ist. Wie dabei aus den Figuren 2 und 5 hervorgeht, sind insbesondere in dieser Topfwand 10b hier einander gegenüberliegend zwei Aussparungen 10d vorgesehen. Durch diese Aussparungen 10d sind die bereits genannten Vorsprünge 11 c des der Zusatzfeder 6 zugeordneten Stütztopfes 11 hindurchgeführt.

Die gezeigte Ausbildung und Anordnung von Federteller 10 und Stütztopf 11 ermöglicht es offensichtlich, dass die quasi innerhalb der Tragfeder 3 liegende Zusatzfeder 6 über den Stütztopf 11 in einem Bereich an der Karosserie 2 abgestützt ist, der bezogen auf die Längsachse 7 in Radialrichtung außerhalb des Elastomerelementes 5 liegt, so dass dieses durch die Abstützung der Zusatzfeder 6 nicht beaufschlagt und somit umgangen wird. Gleichzeitig wird ermöglicht, dass sich die in Radialrichtung außerhalb der Zusatzfeder 6 liegende Tragfeder 3 über ihren Federteller 10 am zentral, d.h. im Bereich bzw. in direkter Umgebung der Längsachse 7 liegenden Elastomerelement 5 abstützt. Diese sog. "Überkreuz-Abstützung" wird dadurch ermöglicht, dass der Stütztopf 11 und der Federteller 10 ineinander verschachtelt sind. Dabei macht auch Figur 6 diese "verschachtelte" Anordnung besonders deutlich, wobei aus dieser Figur 6 weiter ersichtlich wird, dass die besagten Aussparungen 10d in der Topfwand 10b zumindest teilweise in den Kragen 10c hineinragen. Die konkrete Gestaltung muss dabei so erfolgen, dass ein ineinander verschachtelter Zusammenbau von Federteller 10 und Stütztopf 11 möglich ist.

In den Figuren nicht dargestellt ist ein dem Fachmann bekanntes Drehlager, welches zwischen der Tragfeder 3 und deren Federteller 10 vorgesehen sein kann, womit das gezeigte Federbein auch für lenkbare Räder zum Einsatz kommen kann, während sich das dargestellte Ausführungsbeispiel hierfür nicht eignet, jedoch kann ohnehin eine Vielzahl von Details insbesondere konstruktiver Art abweichend von obigen Erläuterungen gestaltet sein, ohne den Inhalt der Patentansprüche zu verlassen. Insbesondere kann auch eine andere Anzahl von Vorsprüngen 11c am Stütztopf 11 und eine dementsprechende Anzahl und Gestaltung von Aussparungen 10d in der Topfwand 10c des Federtellers 10 vorgesehen sein.

### Bezugszeichenliste:

- 1: Radführungsglied
- 2: Karosserie
- 3: Tragfeder
- 4: Dämpfer
- 4a: Kolbenstange (von 4)
- 4b: Dämpferzylinder (von 4)
- 5: Stützlager bzw. Elastomerelement desselben
- 5a,b: Einzelelemente (von 5)
- 6: Zusatzfeder
- 7: Längsachse des Federbeins
- 8: Zentralmutter
- 9: Gelenkteller
- 10: Federteller (für 3)
- 10a: Boden (von 10)
- 10b: Topfwand (von 10)
- 10c: Kragen (von 10)
- 10d: Aussparung (in 10b)
- 11: Stützkopf (für 6)
- 11a: Boden (von 11)
- 11b: Topfwand (von 11)
- 11c: Vorsprung (von 11)
- 12: Befestigungsbolzen (für 11c an 2)

## Patentansprüche

1. Federbein-Abstützung für ein Fahrzeug-Rad mit einer an einem Radführungsglied (1) abgestützten Tragfeder (3) mit zugeordnetem Dämpfer (4), die über ein elastomeres und somit als Feder (5a) und Dämpfer (5b) wirkendes Stützlager (5) letztlich an der Karosserie (2) des Fahrzeugs abgestützt sind, sowie mit einer Zusatzfeder (6), die erst ab einem bestimmten Einfederweg der Tragfeder (3) wirksam wird,
**dadurch gekennzeichnet, dass** die Zusatzfeder (6) unter Umgehung des Stützlagers (5) zwischen dem Radführungsglied (1) und der Fahrzeug-Karosserie (2) wirkt.

2. Federbein-Abstützung nach Anspruch 1, wobei ein der Tragfeder (3) zugeordneter Federteller (10) sowie eine Kolbenstange (4a) des Dämpfers (4) über ein Elastomerelement (5) letztlich an der Karosserie (2) des Fahrzeugs abgestützt sind und wobei die Zusatzfeder (6) durch einen Anschlag für den Dämpferzylinder (4b) des Dämpfers (4) gebildet ist und unter Umgehung des Elastomerelementes (5) im wesentlichen direkt an der Karosserie (2) abgestützt ist,
**dadurch gekennzeichnet, dass** ein sich an der Karosserie (2) abstützender Stütztopf (11) für die Zusatzfeder (6) mit dem Federteller (10) der Tragfeder (3) verschachtelt angeordnet ist.

3. Federbein-Abstützung nach Anspruch 2,
**dadurch gekennzeichnet, dass** der Federteller (10) im wesentlichen topfförmig ausgebildet ist, einen bevorzugt umlaufenden Kragen (10c) zur Abstützung der Tragfeder (3) aufweist, mit seinem Boden (10a) am Elastomerelement (5) anliegt und zumindest in der Topfwand (10b) geeignete Aussparungen (10d) aufweist, durch welche entsprechende Vorsprünge (11c) des im wesentlichen konzentrisch sich auf der dem Elastomerelement (5) abgewandten Seite des Federteller-Bodens (10a) befindenden Zusatzfeder-Stütztopfes (11) hindurchtreten, über die der Zusatzfeder-Stütztopf (11) an der Karosserie (2) abgestützt ist.

## Claims

1. A suspension strut for a vehicle wheel, with a suspension spring (3) supported on a wheel guiding element (1) with an associated damper (4), which are ultimately supported by means of a support bearing (5), which is elastomeric and therefore acts as a spring (5a) and damper (5b), on the body (2) of the vehicle, and with an additional spring (6), which only becomes active from a specific compression stroke of the suspension spring (3), **characterised in that** the additional spring (6) acts between the wheel guiding element (1) and the vehicle body (2) bypassing the support bearing (5).

2. A suspension strut according to claim 1, wherein a spring plate (10) associated with the suspension spring (3), and a piston rod (4a) of the damper (4) are ultimately supported by means of an elastomer element (5) on the body (2) of the vehicle and wherein the additional spring (6) is formed by a stop for the damper cylinder (4b) of the damper (4) and is supported substantially directly on the body (2) bypassing the elastomer element (5), **characterised in that** a support pot (11), which is supported on the body (2), for the additional spring (6) is arranged nested with the spring plate (10) of the suspension spring (3).

3. A suspension strut according to claim 2, **characterised in that** the spring plate (10) is substantially pot-shaped, has a preferably peripheral collar (10c) for supporting the suspension spring (3), rests with its base (10a) against the elastomer element (5) and has suitable recesses (10d) at least in the pot wall (10b), through which recesses corresponding projections (11c) of the additional spring support pot (11) located substantially concentrically on the side of the spring plate base (10a) remote from the elastomer element (5) pass, by means of which the additional spring support pot (11) is supported on the body (2).

## Revendications

1. Appui de jambe de force d'une roue de véhicule comportant un ressort de support (3) appuyé contre un organe de guidage de roue (1) avec un amortisseur (4) associé, appuyé par l'intermédiaire d'un appui (5) élastomère et fonctionnant ainsi comme un ressort (5a) et comme un amortisseur (5b), pour être appuyé finalement contre la carrosserie (2) du véhicule ainsi qu'un ressort supplémentaire (6) qui n'intervient qu'après une certaine course de compression du ressort de support (3), **caractérisé en ce que**,
le ressort supplémentaire (6) agit entre l'organe de guidage de roue (1) et la carrosserie (2) du véhicule en contournant le palier de support (5).

2. Appui d'une jambe de force selon la revendication 1,
dans lequel
une coupelle à ressort (10) associée au ressort de support (3) ainsi qu'une tige de piston (4a) de l'amortisseur (4) sont appuyées finalement sur la carrosserie (2) du véhicule par l'intermédiaire d'un élément en élastomère (5) et
le ressort complémentaire (6) est formé par une butée du cylindre d'amortisseur (4b) de l'amortisseur (4) et contournant l'élément en élastomère (5) en s'appuyant pratiquement directement contre la carrosserie (2),
**caractérisé par**
une tête d'appui (11) qui s'appuie contre la carrosserie (2) pour le ressort complémentaire (6) en étant imbriquée avec la coupelle de ressort (10) du ressort de support (3).

3. Appui de jambe de force selon la revendication 2,
**caractérisé en ce que**
la coupelle de ressort (10) a pratiquement une forme de pot, avec une collerette (10c) de préférence périphérique pour soutenir le ressort de support (3), un fond (10a) appliqué contre l'élément en élastomère (5) et au moins des évidements (10d) appropriées dans la paroi supérieure (10b), que des parties en saillie (11b) correspondantes du pot d'appui de ressort, complémentaire, (11) pratiquement concentrique et sur le côté du fond (10a) de la coupelle de ressort non tourné vers l'élément en élastomère (5), par lesquelles le pot d'appui complémentaire (11), s'appuie contre la carrosserie (2).
